# EUROPEAN PATENT SPECIFICATION

(11) **EP 4 386 221 B1**
(45) Date of publication and mention of the grant of the patent: **31.12.2025**
(21) Application number: 23216493.9
(22) Date of filing: 14.12.2023
(51) Int. Cl.: F16B 37/04, F16B 37/02, F16B 5/02

(54) **FASTENER CLIP ASSEMBLY WITH MULTIPLE THREADS FOR RECEIVING A SCREW**
BEFESTIGUNGSKLAMMERANORDNUNG MIT MEHREREN GEWINDEN ZUR AUFNAHME EINER SCHRAUBE
ENSEMBLE PINCE DE FIXATION À FILETAGES MULTIPLES POUR RECEVOIR UNE VIS

(30) Priority: 14.12.2022 US 202263432644 P; 23.11.2023 US 202318518506
(43) Date of publication of application: 19.06.2024
(73) Proprietor: Termax Company, Lake Zurich, IL 60047 (US)
(72) Inventor: Dickinson, Daniel James, LINCOLNSHIRE, 60069 (US); Friesorger, David, MCHENRY, 60050 (US)
(74) Representative: Weinstein Services & Conseils

(56) References cited:
- US-A- 4 595 325
- US-A1- 2008 289 155
- US-A1- 2016 252 127

## Description

### A. Background

The invention relates generally to devices for fastening objects, and more particularly to a fastener clip assembly for insertion into an engagement structure, such as a vehicle chassis, a hollow substrate, a wall, a plate, or any suitable surface.

A number of devices and fasteners are currently available for fastening panels, such as body panels and automobile interior trim piece panels, to the chassis of a vehicle. As used herein, a body panel refers to, for example, any interior or exterior body panel on a vehicle, a plastic interior trim piece, door panel, headliner or any interior trim piece. Additionally, the panel may be any suitable exterior body panel, such as a fender, bumper, quarter panel or door panel. The chassis of the vehicle may include any substrate, plate, body panel, structural framework, chassis component or subcomponent, wall or any suitable object.

These conventional fastener devices provide approximately relatively equal levels of insertion and extraction force. These body panels often attach to the chassis of an automobile with a relatively high level of insertion force while providing a relatively low level of extraction force.

Fastener clips, such as two-piece fasteners (multi-piece), are known for attaching body panels to an automobile chassis. Two-piece fasteners are used so that if the panels are removed after original installation, such as to service the components in the door, they may be pulled apart so that one portion remains attached to the sheet metal while the other remains attached to the trim panel. The two pieces may also be reattached after separation. However, two-piece fasteners require manufacturing of multiple pieces and labor-intensive assembly of the two pieces and thus are relatively expensive.

One-piece fasteners are typically less expensive than two or multi piece fasteners. One-piece fasteners have a base to attach to a body panel and a post attached to the base and wings attached at least to the top of the post at a tip of the fastener for fastening to a frame slot. However, if the frame slot and the fastener are misaligned then the forces on the wings are unequal since the wing closest to the slot edge will experience higher wing compression while the other wing will have insufficient springing force to engage the slot. As the clip is forced into the slot, such high forces on one wing may cause the wing to break off thus rendering the fastener incapable of fastening the body panel to the frame. Worse, the broken, damaged or weakened wing can cause detachment of the body panel or contribute to rattles.

The wings of conventional fasteners have a sharp, unsmooth groove to engage the edge of the frame slot. When the clip is removed however, the sharp edges of the frame slot cut into the softer plastic and cut the groove. During manufacture, the slots are typically formed in the frame of the vehicle, such as in an inner roof or door sheet metal structure, by punching the sheet metal. As the punch enters the sheet metal, the outer part of the sheet metal is pushed toward the inside and a metal puncture or ridge is formed on the inside of the sheet metal. The resulting slot edge on the outer part of the slot is relatively smooth; however, the inner part of the slot edge is sharp and rough. Upon removal of the fastener clip, the sharp edges of the frame cut off the groove so that the clip may not be reinserted and reusable.

If the slot is off-center or if the sheet metal varies in thickness or if tolerances in production of the slot in the vehicle chassis or in the trim-piece exist, for example, then engagement of one portion of the hole in the chassis with one of the wings may not provide suitable frictional engagement. Twisting of the body panel will be likely more prevalent because less than all contact points are actually made with the slot of the vehicle chassis. As a result, conventional single piece fasteners do not self-align themselves when the fastener and the body panel are misaligned and are prone to wing breakage such that the fastener cannot be re-attached.

Conventional fasteners typically do not adequately secure the panel to the vehicle chassis having variations in slot size and location or sheet metal with different curvature or thicknesses throughout. Conventional single piece fasteners do not self-align themselves when the fastener and the body panel are misaligned and are prone to wing breakage such that the fastener cannot be re-attached. Also, conventional fasteners are not suitable when subjected to a variety of environmental conditions, such as in the presence of vibration at various levels of amplitude and frequency. For example, conventional fasteners of this type typically do not prevent or minimize the amount of buzzing, rattling or any other type of noise that may cause attention to the occupants of the vehicle or otherwise weaken the attachment. Conventional fasteners do not adequately accommodate various levels of production tolerances, such as various dimensions amongst, for example, the body panels as well as the vehicle chassis. Thus, conventional fastener devices typically do not self-align nor adequately fasten to a range of sheet metal thicknesses and do not minimize or eliminate buzzing and rattling and do not sufficiently accommodate variations in production tolerances. As a result, wear, squeaks, rattles, buzzing, corrosion and loss of elasticity and loss of sealing may result, especially after years of vehicle operation and exposure to vibration, heat, humidity, and other environmental conditions. A fastener clip assembly with a one-piece fastener is known from US 4 595 325 A, featuring a common base portion having an aperture therethrough for receiving a threaded member and a pair of spaced-apart resilient torque arms.

### B. Brief Description of the Drawings

Other objects and advantages of the invention may become apparent upon reading the detailed description and upon reference to the accompanying drawings.
Figure 1 is an exploded view of a fastener clip assembly, in accordance with some embodiments.
Figure 2 is a view of a fastener clip, in accordance with some embodiments.
Figure 3 is an alternative view of a fastener clip, in accordance with some embodiments.
Figure 4 is another alternative view of a fastener clip, in accordance with some embodiments.
Figure 5 is a view of an alternative fastener clip having unevenly spaced sets of threads, in accordance with some embodiments.
Figure 6 is an view of an alternative fastener clip having two sets of threads, in accordance with some embodiments.
Figure 7 is a view of an assembled fastener clip attached to a first component and to a screw and a second component, in accordance with some embodiments.
Figure 8 is another view an assembled fastener clip attached to a first component and to a screw and a second component, in accordance with some embodiments.
Figure 9 is yet another view an assembled fastener clip attached to a first component and to a screw and a second component, in accordance with some embodiments.

A fastener clip assembly according to claim 1 is provided. While the invention is subject to various modifications and alternative forms, specific embodiments thereof are shown by way of example in the drawings and the accompanying detailed description. It should be understood, however, that the drawings and detailed description are not intended to limit the invention to the particular embodiments. This disclosure is instead intended to cover all modifications, equivalents, and alternatives falling within the scope of the present invention as defined by the appended claims.

### C. Detailed Description

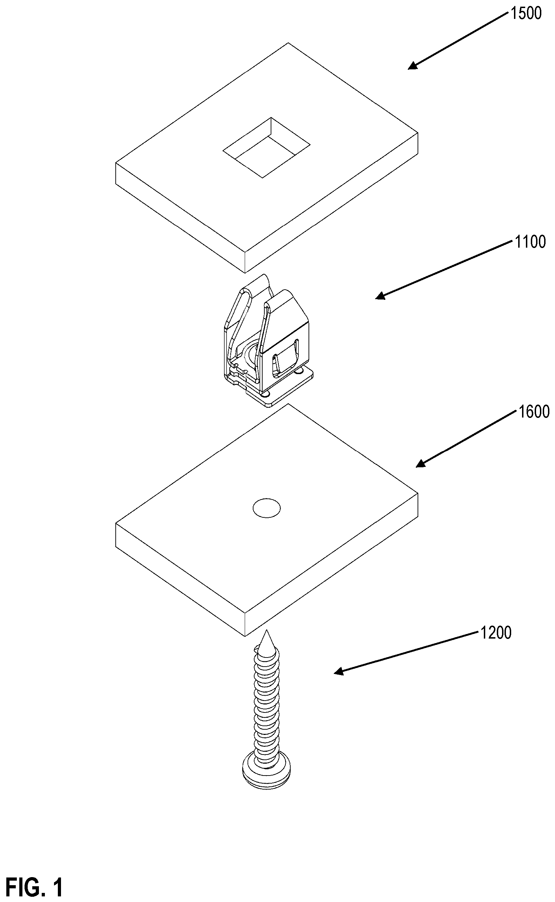

Figure 1 is an exploded view of a fastener clip assembly, in accordance with some embodiments.

In some embodiments, the fastener clip assembly comprises high-retention fastener clip 1100 and screw 1200. Fastener clip 1100 and screw 1200 may be configured to fasten together two different components. For example, fastener clip 1100 and screw 1200 may be configured to retain various trim panels (such as second component 1600) to a vehicle chassis (such as first component 1500). It should be noted, however, that the fastener clip assembly may be configured to join various other pairs of components to each other and is not limited to fastening a panel to a chassis.

Fastener clip 1100 may be configured to be inserted into and to attach to a slot/hole in first component 1500. A second component is configured to be attached to first component 1500 using a screw that is configured to be screwed into and attach to fastener clip 1100.

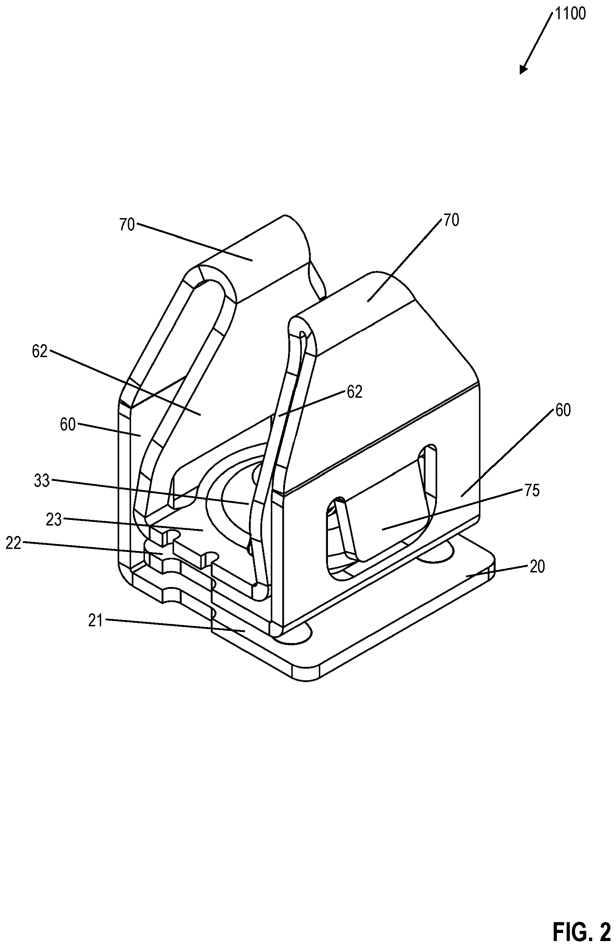

Figure 2 is a view of a fastener clip, in accordance with some embodiments.

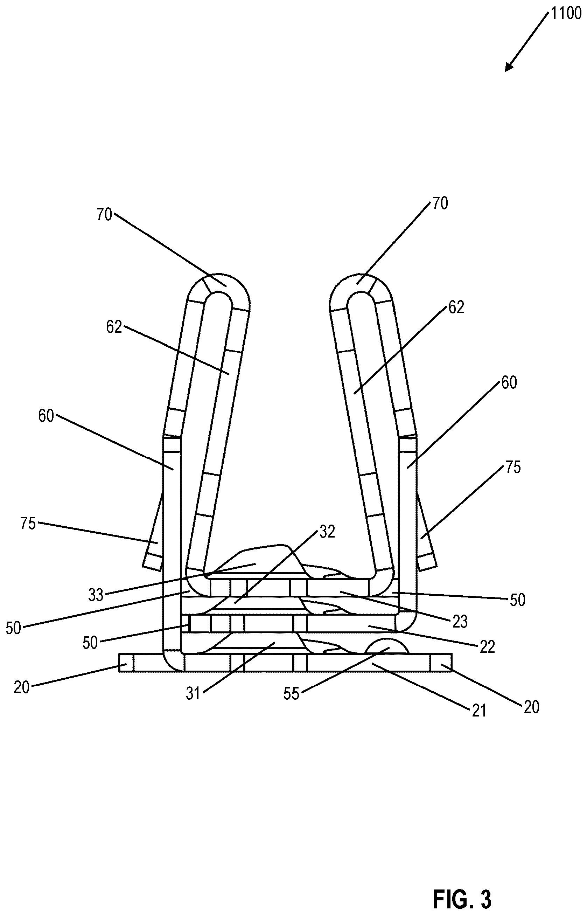

Figure 3 is an alternative view of a fastener clip, in accordance with some embodiments.

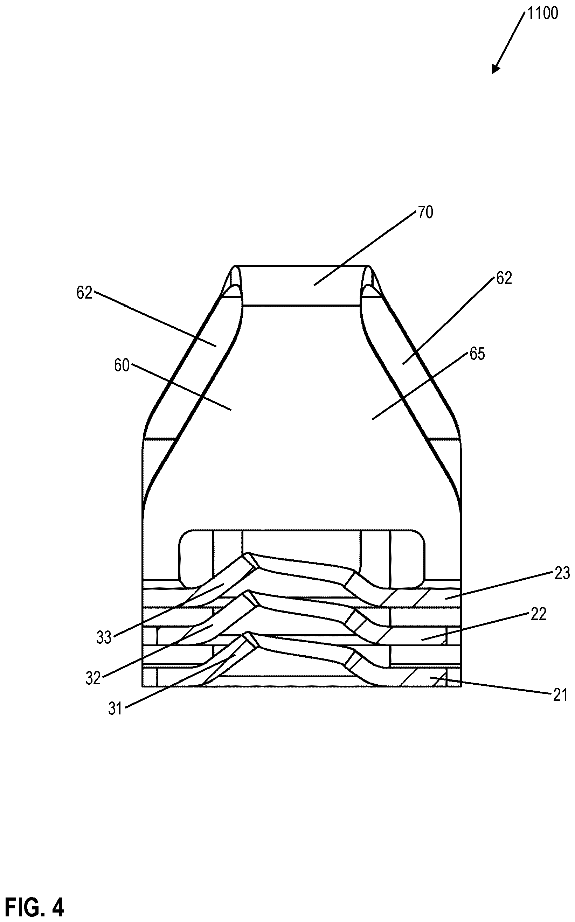

Figure 4 is another alternative view of a fastener clip, in accordance with some embodiments.

In some embodiments, fastener clip 1100 includes a pair of outer legs (or simply legs) 60, one outer leg on each side of fastener clip 1100, and a pair of inner legs 62, one inner leg on each side of fastener clip 1100. Each outer leg is joined to one of the inner legs at first and second head portions 70: one of the inner legs to one of the outer legs at one of the head portions 70 and the other of the inner legs to the other of the outer legs at the other one of the head portions 70.

In some embodiments, pair of legs 60 taper inward as they rise respectively toward head portions 70, making fastener clip 1100 narrower at the top and easier to insert into a slot in the first component, for example.

In some embodiments, fastener clip 1100 comprises three parallel platforms 21, 22, and 23 stacked one on top of the other. In some embodiments, each of the platforms 21, 22, and 23 comprise respectively threads 31, 32, and 33, which are configured to receive a screw. In some embodiments, threads (not shown) may also be formed at the inside of inner legs 62 close to head portions 70, which are also configured to receive the screw providing additional torque tolerance for the screw.

In some embodiments, the rotational orientation of all the treads may be determined based at least upon the distances between the platforms and the distance between the platforms and the top of inner legs 62 in order for a screw with appropriate threads to be able to be screwed through threads 31, 32, and 33 and optionally through the threads at the top of the inside of legs 62 without binding.

In some embodiments, fastener clip 1100 may also include two wings 75, one on each of legs 62. In some embodiments, wings 75 are attached at their top portion and extend downward. In some embodiments, wings 75 are configured to engage a slot in a surface to which clip 1100 is configured to attach (such as an automobile chassis). Wings 75 (as well as legs 60 in some embodiments) are configured to bend inward as the clip is pushed into the slot and then spring back outward for a bottom of wings 75 to engage the slot on the first component.

In some embodiments, fastener clip 1100 may also include feet 20. Feet 20 are configured to rest against a first component to which fastener clip engages, providing a stopping point for fastener clip 1100.

In some embodiments, fastener clip 1100 may be made of metal, for strength and elasticity, for example. In some embodiments, fastener clip 1100 may be made from one continuous piece of long and mostly rectangular flat piece of metal that is appropriately punched, stamped, and/or bent to form the features of fastener clip 1100. In some embodiments, platform 21 may be formed first at one end of the metal piece followed by one of the outer legs 60, one of the inner legs 62, platform 23, the other inner leg 62, the other outer leg 60, and ending at platform 22 at the other of the metal piece.

In some embodiments, any number of platforms (and corresponding threads for each platform) may be formed depending on the torque requirements for screw 1200 for each application. For example, each platform/thread adds to the amount of torque that the screw can tolerate, and as such, a greater number of platforms/threads may be chosen for higher torque requirements. As will be seen below, only two platforms/threads may be used if less torque tolerance is required. And in embodiments where more torque tolerance is required, three or more platforms/threads may be used.

In some embodiments, supporting structures (such as tabs, bumps, etc.) may be added to better support the platforms. Additional support may be needed, for example, to handle the additional tension generated when a screw is inserted through threads 31, 32, and 33. Tabs 50, for example, may be configured to engage corresponding receiving slots in the legs, thereby increasing the force required to move the platforms relative to each other and increasing the force that each of the threads can withstand when a screw is inserted and tightened onto fastener clip 1100. In some embodiments, for additional support, support bump 55 may be placed on platform 21 in order to support platform 22 from coming closer to platform 21 under the tension from inserting and tightening a screw into fastener clip 1100. Support bump 55 further increases the force required to move the platforms relative to each other, further increasing the force that each of the threads can withstand.

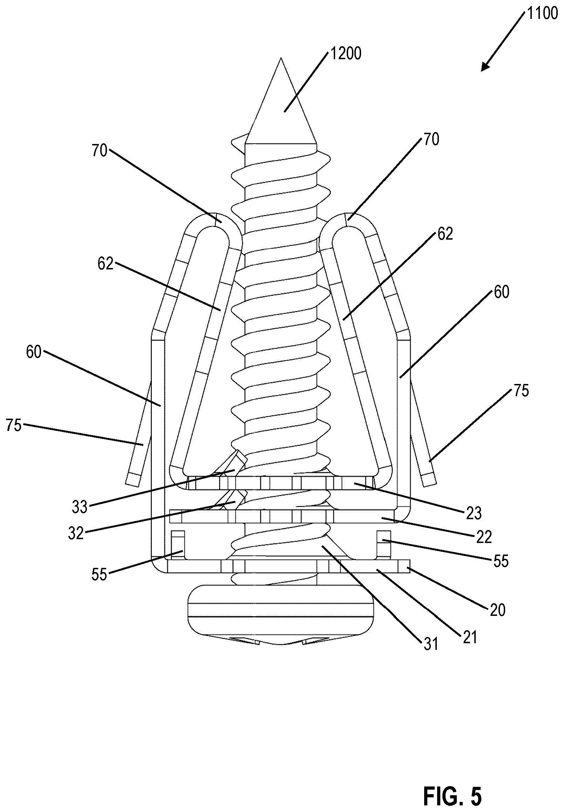

Figure 5 is a view of an alternative fastener clip having unevenly spaced sets of threads, in accordance with some embodiments.

In some embodiments, alternative fastener clip 1100 includes a pair of outer legs (or simply legs) 60, one outer leg on each side of fastener clip 1100, and a pair of inner legs 62, one inner leg on each side of fastener clip 1100. The two pairs of legs are joined at first and second head portions 70: one of the inner legs to one of the outer legs at one of the head portions 70 and the other of the inner legs to the other of the outer legs at the other one of the head portions 70.

In some embodiments, pair of legs 60 taper inward as they rise respectively toward head portions 70, making fastener clip 1100 narrower at the top and easier to insert to a slot in a first component, for example.

In some embodiments, fastener clip 1100 comprises three platforms 21, 22, and 23 stacked one on top of the other with platform 21 toward the bottom of fastener clip 1100. In some embodiments, each of the platforms 21, 22, and 23 comprise respectively threads 31, 32, and 33, which are configured to receive a screw. In some embodiments, threads (not shown) may also be formed to the inner of inner legs 62 close to head portions 70, which are also configured to receive a screw.

In some embodiments, the pitch of all the treads may be formed based at least upon the distances between the platforms and the distance between the platforms and the top of inner legs 62 in order to for a screw with appropriate threads to be able to be screwed through threads 31, 32, and 33 and optionally through the threads at the top of the inner of legs 62 without and binding.

In the embodiments shown in Figure 5, the distance between platform 21 and platform 22 is approximately twice the distance between platform 22 and platform 23. As such, thread 31 may be rotated 180 degrees compared to thread 32 and thread 33 in order for screw 1200 to fit through all the threads without binding.

In some embodiments, fastener clip 1100 may also include two wings 75, one on each of legs 62. In some embodiments, wings 75 are attached at their top portion and extend downward. In some embodiments, wings 75 are configured to engage a slot in a surface to which clip 1100 is configured to attach (such as a first component). Wings 75 as well as legs 60 are configured to bend inward as the clip is pushed into the slot and then spring back outward, thereby a bottom of wings 75 engaging the slot on the chassis.

In some embodiments, fastener clip 1100 may also include feet 20. Feet 20 are configured to rest against a chassis to which fastener clip engages, providing a stopping point for fastener clip 1100.

In some embodiments, supporting structures (such as tabs, bumps, etc.) may be added to better support the platforms. Additional support may be needed, for example, to handle the additional tension generated when a screw is inserted through threads 31, 32, and 33. In some embodiments, for additional support, support bumps 55 may be placed on platform 21 in order to support platform 22 from coming closer to platform 21 under the tension from inserting and tightening a screw into fastener clip 1100. Support bump 55 further increases the force required to move the platforms relative to each other, further increasing the force that each of the threads can withstand.

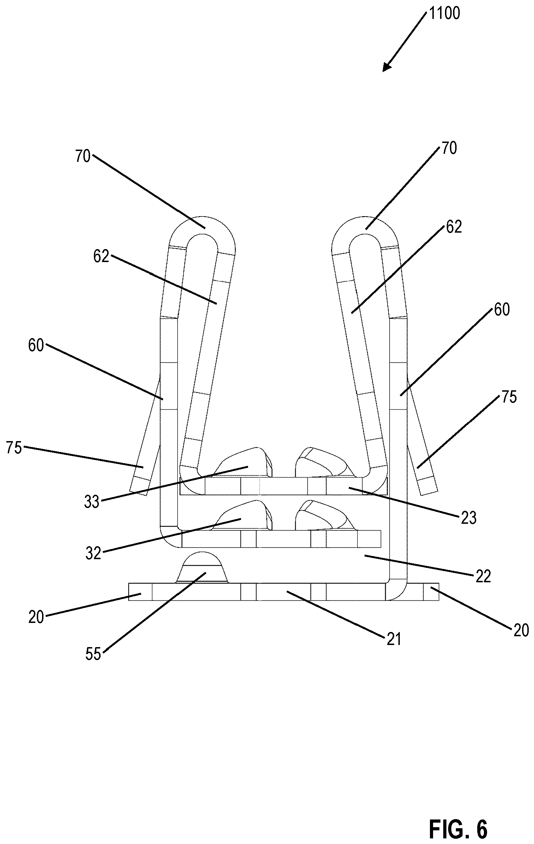

Figure 6 is an view of an alternative fastener clip having two sets of threads, in accordance with some embodiments.

In some embodiments, alternative fastener clip 1100 includes a pair of outer legs (or simply legs) 60, one outer leg on each side of fastener clip 1100, and a pair of inner legs 62, one inner leg on each side of fastener clip 1100. The two pairs of legs are joined at first and second head portions 70: one of the inner legs to one of the outer legs at one of the head portions 70 and the other of the inner legs to the other of the outer legs at the other one of the head portions 70.

In some embodiments, pair of legs 60 taper inward as they rise respectively toward head portions 70, making fastener clip 1100 narrower at the top and easier to insert to a slot in a chassis, for example.

In some embodiments, fastener clip 1100 comprises three platforms 21, 22, and 23 stacked one on top of the other with platform 21 toward the bottom of fastener clip 1100.

In the alterative embodiment shown in Figure 6, platforms 21 and 22 may comprise respectively threads 31 and 32, whereas platform 21 may not comprise threads. For example, such alternative fastener clip 1100 with two instead of three threads may be used in applications where torque requirements for screw 1200 are lower. In yet other embodiments, more than three platforms/threads may be used when higher torque tolerances are required.

In some embodiments, fastener clip 1100 may also include two wings 75, one on each of legs 62. In some embodiments, wings 75 are attached at their top portion and extend downward. In some embodiments, wings 75 are configured to engage a slot in a surface to which clip 1100 is configured to attach (such as an automobile chassis). Wings 75 as well as legs 60 are configured to bend inward as the clip is pushed into the slot and then spring back outward, thereby a bottom of wings 75 engaging the slot on the chassis.

In some embodiments, fastener clip 1100 may also include feet 20. Feet 20 are configured to rest against a chassis to which fastener clip engages, providing a stopping point for fastener clip 1100.

In some embodiments, supporting structures (such as tabs, bumps, etc.) may be added to better support the platforms. Additional support may be needed, for example, to handle the additional tension generated when a screw is inserted through threads 31, 32, and 33. In some embodiments, for additional support, support bump 55 may be placed on platform 21 in order to support platform 22 from coming closer to platform 21 under the tension from inserting and tightening a screw into fastener clip 1100. Support bump 55 further increases the force required to move the platforms relative to each other, further increasing the force that each of the threads can withstand.

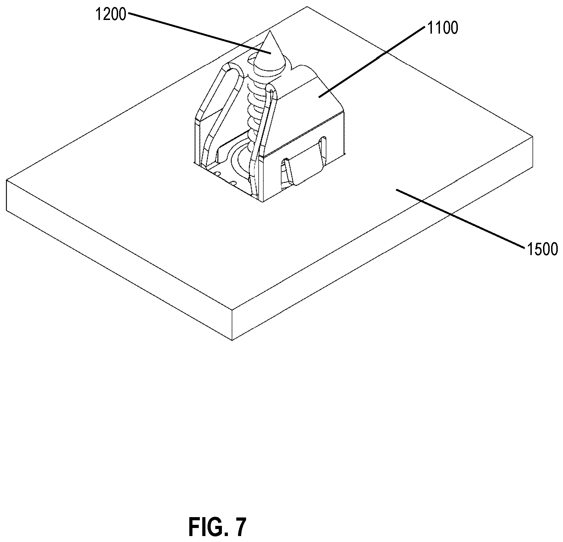

Figure 7 is a view of an assembled fastener clip attached to a first component and to a screw, in accordance with some embodiments.

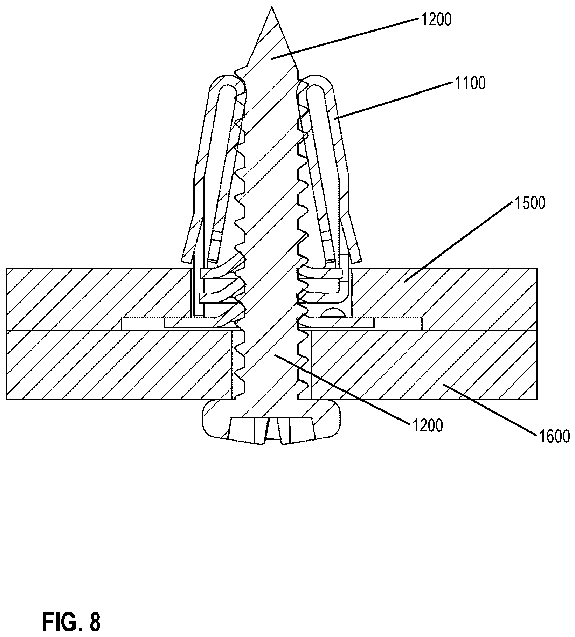

Figure 8 is another view an assembled fastener clip attached to a first component and to a screw, in accordance with some embodiments.

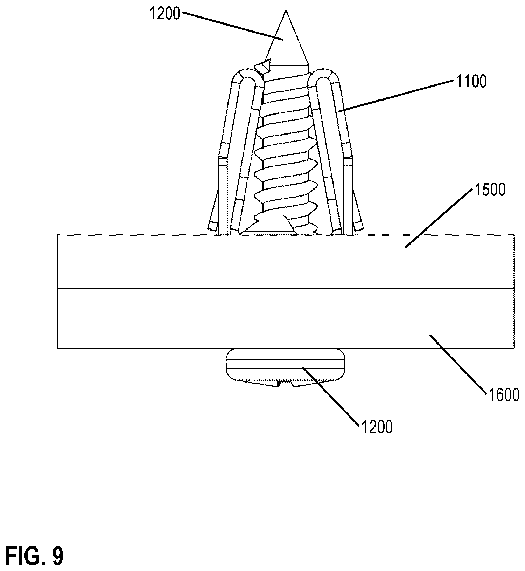

Figure 9 is yet another view an assembled fastener clip attached to a first component and to a screw, in accordance with some embodiments.

In some embodiments, fastener clip 1100 may be configured to be attached to a slot in chassis 1500. Fastener clip 1100 is also configured to receive and couple to screw 1200. Screw 1200 may be used to attach various components, such as second component 1600, to chassis 1500.

It should be noted that, after being screwed into fastener clip 1100, screw 1200 is configured to push against the legs of fastener clip 1100 and to prevent the legs from collapsing inward. As such, this further increases the difficulty of separating fastener clip 1100 from chassis 1500, which further increases the coupling between the two.

It is understood that the implementation of other variations and modifications of the present invention in its various aspects will be apparent to those of ordinary skill in the art and that the invention is not limited by the specific embodiments described. It is therefore contemplated to cover by the present invention any and all modifications, variations or equivalents that fall within the scope of the basic underlying principles disclosed and claimed herein, within the scope of the appended claims.

One or more embodiments of the invention are described above. It should be noted that these and any other embodiments are exemplary and are intended to be illustrative of the invention rather than limiting. While the invention is widely applicable to various types of systems, a skilled person will recognize that it is impossible to include all of the possible embodiments and contexts of the invention in this disclosure. Upon reading this disclosure, many alternative embodiments of the present invention will be apparent to persons of ordinary skill in the art.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the scope of the invention. Thus, the present invention is not intended to be limited to the embodiments shown herein but is to be accorded the widest scope consistent with the principles and novel features disclosed herein and within the scope of the appended claims.

The benefits and advantages that may be provided by the present invention have been described above with regard to specific embodiments. These benefits and advantages, and any elements or limitations that may cause them to occur or to become more pronounced are not to be construed as critical, required, or essential features of any or all of the claims. As used herein, the terms "comprises," "comprising," or any other variations thereof, are intended to be interpreted as non-exclusively including the elements or limitations that follow those terms. Accordingly, a system, method, or other embodiment that comprises a set of elements is not limited to only those elements and may include other elements not expressly listed or inherent to the claimed embodiment.

While the present invention has been described with reference to particular embodiments, it should be understood that the embodiments are illustrative and that the scope of the invention is not limited to these embodiments. Many variations, modifications, additions and improvements to the embodiments described above are possible. It is contemplated that these variations, modifications, additions and improvements fall within the scope of the invention as detailed within the following claims.

## Claims

1. A fastener clip assembly comprising:
a first leg (60) and a second leg (60) opposite the first leg, the first leg comprising a first top portion (70) and a first bottom portion, and the second leg comprising a second top portion (70) and a second bottom portion;
a first wing (75) extending from the first leg (60) and a second wing (75) extending from the second leg (60);
at least one platform (23) coupling the first leg (60) and the second leg (60) near the first bottom portion and near the second bottom portion ;
one or more platforms (21, 22) coupling the first leg (60) or the second leg (60) near the first bottom portion and near the second bottom portion, wherein the platforms (21, 22, 23) are stacked one on top of the other, wherein at least two of the platforms (21, 22, 23) comprise a thread (31, 32, 33), and wherein each of the threads (31, 32, 33) is configured to receive a screw.

2. The fastener clip assembly of claim 1, wherein:
the first wing (75) and the second wing (75) are configured to engage and to attach to a slot in a first component (1500),
the screw is configured to couple a second component (1600) to the first component (1500) based at least on the screw being configured to be inserted through a hole in the second component (1600) and to be threaded through the threads (31, 32, 33).

3. The fastener clip assembly of claim 1, wherein a number of the threads (31, 32, 33) is determined based at least on a torque tolerance.

4. The fastener clip assembly of claim 1, wherein a rotational orientation of each the threads (31, 32, 33) is determined based at least on vertical distances between the threads.

5. The fastener clip assembly of claim 1, wherein the two or more platforms (21, 22, 23) are parallel to each other.

6. The fastener clip assembly of claim 1, wherein at least some of the platforms (21, 22, 23) comprise at least one of support tabs and support bumps (55), wherein the support tabs engage corresponding receiving slots in the first leg (60) and in the second leg (60) to provide additional support to the two or more platforms (21, 22, 23), wherein the support bumps (55) stop at least some of the platforms (21, 22, 23) from collapsing onto each other.

7. The fastener clip assembly of claim 1, further comprising feet that provide a stop as the fastener clip is being pushed into a slot in the first component (1500).

8. The fastener clip assembly of claim 1, further comprising a first inner leg (62) extending downward from the first top portion (70), and a second inner leg (62) extending downward from the second top portion (70).

9. The fastener clip assembly of claim 8, further comprising leg threads formed between the first inner leg (62) and the second inner leg (62) near the first top portion (70) and near the second top portion (70).

10. The fastener clip assembly of claim 1, wherein the first leg (60), the second leg (60), and the platforms (21, 22, 23) are formed from a single and continuous piece of material.

11. The fastener clip assembly of claim 10, wherein the material is a flat metal piece that is bent, punched, or stamped to form the first wing (75), the second wing (75), the platforms (21, 22, 23), and the threads (31, 32, 33).

## Patentansprüche

1. Befestigungsklammeranordnung, umfassend:
einen ersten Schenkel (60) und einen zweiten Schenkel (60) gegenüber dem ersten Schenkel, der erste Schenkel umfassend einen ersten oberen Abschnitt (70) und einen ersten unteren Abschnitt, und der zweite Schenkel umfassend einen zweiten oberen Abschnitt (70) und einen zweiten unteren Abschnitt;
einen ersten Flügel (75), der sich von dem ersten Schenkel (60) erstreckt, und einen zweiten Flügel (75), der sich von dem zweiten Schenkel (60) erstreckt;
zumindest eine Plattform (23), die den ersten Schenkel (60) und den zweiten Schenkel (60) in der Nähe des ersten unteren Abschnitts und in der Nähe des zweiten unteren Abschnitts verbindet;
eine oder mehrere Plattformen (21, 22), die den ersten Schenkel (60) oder den zweiten Schenkel (60) in der Nähe des ersten unteren Abschnitts und in der Nähe des zweiten unteren Abschnitts koppeln, wobei die Plattformen (21, 22, 23) übereinander gestapelt sind, wobei zumindest zwei der Plattformen (21, 22, 23) ein Gewinde (31, 32, 33) umfassen, und wobei jedes der Gewinde (31, 32, 33) zum Aufnehmen einer Schraube konfiguriert ist.

2. Befestigungsklammeranordnung nach Anspruch 1, wobei:
der erste Flügel (75) und der zweite Flügel (75) konfiguriert sind, um in einen Schlitz in einer ersten Komponente (1500) einzugreifen und daran angebracht zu werden,
die Schraube konfiguriert ist, dass sie eine zweite Komponente (1600) mit der ersten Komponente (1500) verbindet, basierend zumindest darauf, dass die Schraube konfiguriert ist, um durch ein Loch in der zweiten Komponente (1600) eingeführt und durch die Gewinde (31, 32, 33) geschraubt zu werden.

3. Befestigungsklammeranordnung nach Anspruch 1, wobei die Anzahl der Gewinde (31, 32, 33) zumindest basierend auf einer Drehmomenttoleranz bestimmt wird.

4. Befestigungsklammeranordnung nach Anspruch 1, wobei eine Drehausrichtung von jedem der Gewinde (31, 32, 33) zumindest anhand vertikaler Abstände zwischen den Gewinden bestimmt wird.

5. Befestigungsklammeranordnung nach Anspruch 1, wobei die zwei oder die mehreren Plattformen (21, 22, 23) parallel zueinander sind.

6. Befestigungsklammeranordnung nach Anspruch 1, wobei zumindest einige der Plattformen (21, 22, 23) zumindest eines von Stützlaschen und Stützhöckern (55) umfassen, wobei die Stützlaschen in entsprechende Aufnahmeschlitze in dem ersten Schenkel (60) und in dem zweiten Schenkel (60) eingreifen, um den zwei oder mehrere Plattformen (21, 22, 23) zusätzlichen Halt bereitzustellen, wobei die Stützhöcker (55) zumindest einige der Plattformen (21, 22, 23) daran hindern, aufeinander zu stürzen.

7. Befestigungsklammeranordnung nach Anspruch 1, ferner umfassend Füße, die einen Anschlag bereitstellen, wenn die Befestigungsklammer in einen Schlitz in der ersten Komponente (1500) geschoben wird.

8. Befestigungsklammeranordnung nach Anspruch 1, ferner umfassend einen ersten inneren Schenkel (62), der sich von dem ersten oberen Abschnitt (70) nach unten erstreckt, und einen zweiten inneren Schenkel (62), der sich von dem zweiten oberen Abschnitt (70) nach unten erstreckt.

9. Befestigungsklammeranordnung nach Anspruch 8, ferner umfassend Schenkelgewinde, die zwischen dem ersten inneren Schenkel (62) und dem zweiten inneren Schenkel (62) in der Nähe des ersten oberen Abschnitts (70) und in der Nähe des zweiten oberen Abschnitts (70) gebildet sind.

10. Befestigungsklammeranordnung nach Anspruch 1, wobei der erste Schenkel (60), der zweite Schenkel (60) und die Plattformen (21, 22, 23) aus einem einzigen und durchgehenden Materialstück gebildet sind.

11. Befestigungsklammeranordnung nach Anspruch 10, wobei das Material ein flaches Metallstück ist, das gebogen, gestanzt oder geprägt wird, um den ersten Flügel (75), den zweiten Flügel (75), die Plattformen (21, 22, 23) und die Gewinde (31, 32, 33) zu bilden.

## Revendications

1. Ensemble pince de fixation comprenant :
une première patte (60) et une seconde patte (60) opposée à la première patte, la première patte comprenant une première partie supérieure (70) et une première partie inférieure, et la seconde patte comprenant une seconde partie supérieure (70) et une seconde partie inférieure ;
une première aile (75) s'étendant à partir de la première patte (60) et une seconde aile (75) s'étendant à partir de la seconde patte (60) ;
au moins une plateforme (23) couplant la première patte (60) et la seconde patte (60) à proximité de la première partie inférieure et à proximité de la seconde partie inférieure ;
une ou plusieurs plateformes (21, 22) couplant la première patte (60) ou la seconde patte (60) à proximité de la première partie inférieure et à proximité de la seconde partie inférieure, dans lequel les plateformes (21, 22, 23) sont empilées les unes au-dessus des autres, dans lequel au moins deux des plateformes (21, 22, 23) comprennent un filetage (31, 32, 33), et dans lequel chacun des filetages (31, 32, 33) est configuré pour recevoir une vis.

2. Ensemble pince de fixation selon la revendication 1, dans lequel :
la première aile (75) et la seconde aile (75) sont configurées pour mettre en prise et pour se fixer à une fente dans un premier composant (1500),
la vis est configurée pour coupler un second composant (1600) au premier composant (1500) au moins sur la base de la vis qui est configurée pour être insérée dans un trou dans le second composant (1600) et pour être vissée dans les filetages (31, 32, 33).

3. Ensemble pince de fixation selon la revendication 1, dans lequel un nombre de filetages (31, 32, 33) est déterminé sur la base d'au moins une tolérance de couple.

4. Ensemble pince de fixation selon la revendication 1, dans lequel une orientation de rotation de chacun des filetages (31, 32, 33) est déterminée au moins sur la base des distances verticales entre les filetages.

5. Ensemble pince de fixation selon la revendication 1, dans lequel les deux plateformes (21, 22, 23) ou plus sont parallèles entre elles.

6. Ensemble pince de fixation selon la revendication 1, dans lequel au moins certaines des plateformes (21, 22, 23) comprennent au moins l'un parmi des languettes de support et des bossages de support (55), dans lequel les languettes de support mettent en prise des fentes de réception correspondantes dans la première patte (60) et dans la seconde patte (60) pour fournir le support supplémentaire aux deux plateformes (21, 22, 23) ou plus, dans lequel les bossages de support (55) empêchent au moins certaines des plateformes (21, 22, 23) de se replier sur elles-mêmes.

7. Ensemble pince de fixation selon la revendication 1, comprenant en outre des pieds qui fournissent une butée lorsque la pince de fixation est poussée dans une fente dans le premier composant (1500).

8. Ensemble pince de fixation selon la revendication 1, comprenant en outre une première patte interne (62) s'étendant vers le bas à partir de la première partie supérieure (70) et une seconde patte interne (62) s'étendant vers le bas à partir de la seconde partie supérieure (70).

9. Ensemble pince de fixation selon la revendication 8, comprenant en outre des filetages de patte formés entre la première patte interne (62) et la seconde patte interne (62) à proximité de la première partie supérieure (70) et à proximité de la seconde partie supérieure (70).

10. Ensemble pince de fixation selon la revendication 1, dans lequel la première patte (60), la seconde patte (60) et les plateformes (21, 22, 23) sont formées à partir d'une pièce unique et continue de matériau.

11. Ensemble pince de fixation selon la revendication 10, dans lequel le matériau est une pièce métallique plate qui est pliée, poinçonnée ou emboutie pour former la première aile (75), la seconde aile (75), les plateformes (21, 22, 23) et les filetages (31, 32, 33).
